# EUROPEAN PATENT SPECIFICATION

(11) **EP 2 695 362 B1**
(45) Date of publication and mention of the grant of the patent: **30.11.2016**
(21) Application number: 12721188.6
(22) Date of filing: 06.04.2012
(51) Int. Cl.: H04L 29/08, G06F 17/30

(54) **MULTI-USER CACHE SYSTEM**
MEHRNUTZER CACHE SYSTEM
SYSTÈME CACHE MULTI-UTILISATEUR

(30) Priority: 07.04.2011 GB 201105911
(43) Date of publication of application: 12.02.2014
(73) Proprietor: Replify Ltd, Belfast, Antrim BT1 6HT (GB)
(72) Inventor: MOORHEAD, Paul, Belfast Antrim BT1 6HT (GB); WILSON, Fergus, Belfast Antrim BT1 6HT (GB)
(74) Representative: Wallace, Alan Hutchinson
(86) International application number: PCT/EP2012/056382
(87) International publication number: WO 2012/136828

(56) References cited:
- WO-A1-03/098476
- WO-A1-2008/047053
- WO-A2-2009/144688
- US-A1- 2010 121 940
- LAKSHMISH RAMASWAMY ET AL: "Scalable Delivery of Dynamic Content Using a Cooperative Edge Cache Grid", IEEE TRANSACTIONS ON KNOWLEDGE AND DATA ENGINEERING, IEEE SERVICE CENTER, LOS ALAMITOS, CA, US, vol. 19, no. 5, 1 May 2007 (2007-05-01), pages 614-630, XP011356744, ISSN: 1041-4347, DOI: 10.1109/TKDE.2007.1031
- "Local service invocation optimization through call semantic aware data", IP.COM JOURNAL, IP.COM INC., WEST HENRIETTA, NY, US, 6 January 2006 (2006-01-06), XP013112301, ISSN: 1533-0001

## Description

The present invention relates to cache memory systems. In particular, the invention relates to cache memory systems for use in a client-server system across a network.

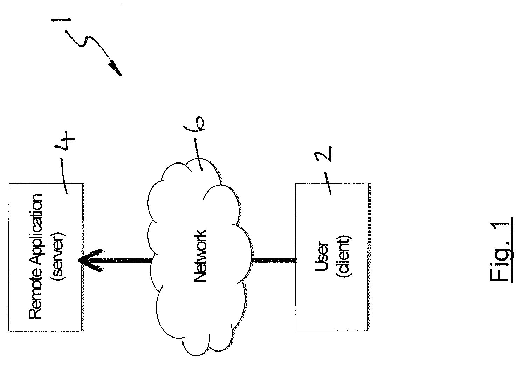

Figure 1 shows a typical client-server system 1 where a client 2 communicates with a server 4 across a network 6. For example a user at the client 2 may access a remote application hosted by the server 4. The client 2 accesses the remote application sending and retrieving data across a network connection. The speed of the network connection determines the speed of access the client 2 has to the remote application. Caching techniques help speed up the client's access to the application by storing data in a cache memory (not shown) on the client side of the network 6, and serving data to the client 2 from the local cache instead of across the network 6. This arrangement is satisfactory for systems in which static information is sent primarily across the network in one direction from the server 4 to the client 2.

WAN (Wide Area Network) optimization solutions teach the provision of a cache memory on both sides of the network, and with both client 2 and server 4 knowing the contents of the cache it is possible for data which would normally go across the network to be replaced with cache references. This provides a cache that works in both directions across the network 6 and allows traffic to be fully dynamic. Peer-to-Peer file sharing techniques provide a distributed cache where clients across the network can each hold a piece of the cache, and when requests are made for a file, it can be constructed from the cached entries of a number of users. Peer-to-Peer file sharing works for sending very large files in one direction, when the files are required by a large group of users. It is not suited to bi-directional transfer, or dynamic information.

International patent application PCT/IB2009/053527 having the International Publication Number WO 2009/144688 A2 discloses a system for locally caching data in which stored data is distributed to a peer device that has an affinity to the stored data.

It would be desirable to provide an improved cache system.

### Summary of the Invention

A cache system for use with a plurality of clients in communication with at least one server across a communications network, wherein each client is associated with a respective client cache memory and configured to store in said respective cache memory at least some data blocks that are, in use, transmitted between said client and said at least one server, the cache system comprising a plurality of cache managers including a respective client cache manager for managing each client cache memory, one or more of said cache managers being arranged to maintain, in respect of each client cache memory, a respective data profile containing data that is indicative of the relative significance of data blocks stored in the respective client cache memory, and wherein said one or more of said cache managers is arranged to cause data that identifies data blocks stored in the respective client cache memory of each of the other client cache managers that are determined from the respective data profile to be relatively significant to be communicated to each of said client cache managers, and wherein said client cache managers are arranged to share at least some of said relatively significant data blocks.

Typically, said communicated data identifies not only the respective data block(s), but also the or each other client cache memory from which the respective data block(s) are available.

In preferred embodiments, said plurality of cache managers includes at least one server cache manager arranged to manage at least one server cache memory associated with said at least one server. Typically, the system comprises a server cache manager arranged to manage a respective server cache memory for each of said clients. The, or each, server cache manager is configured to store in said at least one server cache memory, and preferably in a respective server cache memory, at least some data blocks that are, in use, transmitted between respective clients and the, or each, server. Conveniently, the, or each, server cache manager is arranged to maintain respective data profiles, or at least part of respective data profiles, in respect of said client cache memories. This may be achieved by monitoring the storage and/or retrieval of data blocks in and from said at least one server cache memory, and preferably from said respective server cache memories. Alternatively, or in addition, said respective client cache managers may be arranged to maintain respective data profiles, or at least part of said respective data profiles, in respect of said client cache memories. This may be achieved by monitoring the storage and/or retrieval of data blocks in and from said respective client cache memories.

Where said data profiles, or part thereof, are maintained by said server cache manager(s), said server cache manager(s) may communicate to at least one, but conveniently all, of said client cache managers said data identifying relatively significant data blocks stored in said other client cache memories. Optionally, one or more of said client cache managers may be arranged to communicate said data identifying relatively significant data blocks to one or more others of said client cache managers. Alternatively, or in addition, where said data profiles, or part thereof, are maintained by said client cache managers, said client cache managers may communicate to at least one, but conveniently all, of said other client cache managers said data identifying relatively significant data blocks stored in said other client cache memories.

In preferred embodiments, each client cache manager may be arranged to communicate with one or more of the other client cache managers in order to obtain from said other client cache mangers and/or the respective client cache memory, as applicable, one or more of said data blocks and/or a reference to one or more of said data blocks identified as being relatively significant. Optionally, each client cache manager may be arranged to obtain one or more relatively significant data blocks from the client cache memory of another client, and to store the obtained data block(s) in its own client cache memory. Optionally, in response to a request (e.g. by the respective client) to transmit one or more of said relatively significant data blocks to said at least one server, the respective client cache manager is configured to obtain the requested data block(s) or a respective reference to the requested data block(s) from one of said other client cache managers or client cache memories, and to cause said obtained data block(s) or data block reference(s) to be communicated to said at least one server. Optionally, in response to a request (e.g. by the respective client) to receive one or more of said relatively significant data blocks from said at least one server, the respective client cache manager is configured to obtain the requested data block(s) from one of said other client cache managers or client cache memories, and to cause said obtained data block(s) to be stored in its own client cache memory.

Optionally, in the event that a client cache manager receives from another of said client cache mangers and/or the respective client cache memory, as applicable, a reference to one or more of said data blocks identified as being relatively significant (and which is not already stored by said client cache manager), said another client cache manager is caused, for example by said at least one server, to send said one or more of said data blocks to said client cache manager without said client cache manager having to request it. Said client cache manager may be configured to wait for a threshold period to receive said one or more data blocks and, if they are not received within said period, to request said one or more data blocks from said another of said cache managers and/or respective client cache memory.

In preferred embodiments, all data blocks stored in said client caches are also stored in said at least one server cache and so said client cache managers need only transmit, to said at least one server, references to data blocks that are desired to be transmitted. Similarly, said server cache manager may only transmit, to said clients, references to data blocks that are desired to be transmitted.

In preferred embodiments, said data profile includes data indicative of the respective frequency with which respective data blocks stored in the respective client cache memory are accessed. In this context "accessed" is intended to mean required by a communication between the respective client and said at least one server. Said data profile may also include data indicative of how common each respective data block is amongst the respective client cache memories (although this data may be stored separately from the data profile for respective client cache memories, e.g. maintained elsewhere by said at least one server cache manager). Optionally, said data profile may also include data indicative of how recently respective data blocks stored in the respective client cache memory have been accessed. Optionally, said data profile may also include data indicative of how regularly respective data blocks stored in the respective client cache memory are been accessed.

The information contained in the data profiles may be used by the cache system to determine the relative significance of data blocks stored in the client caches. The system may be arranged to determine, based at least in part on the information contained in the respective data profiles, which data blocks, stored in the respective client caches, are suitable for sharing amongst the clients. Advantageously, those data blocks that are deemed worthy of sharing are identified as said relatively significant data blocks. In making these determinations, the cache system may be arranged to assess one or more of the following: the regularity (but not necessarily the frequency) with which respective data blocks are accessed; the frequency with which data blocks are accessed within a given time period; and significant changes in access pattern (e.g. an increase in occurrence above a threshold amount) in respect of at least one but preferably two or more clients. These determinations are conveniently made, in whole or in part, by the, or each, server cache manager, but may alternatively, or in addition, be made in whole or in part by one or more of said client cache managers.

Preferably, the cache system holds grouping data indicating one or more characteristics of the clients, and/or application(s) supported by the clients, and/or of the users of the clients, and is configured to use the grouping data to arrange the clients into one or more groups of one or more clients. For example, in respect of the clients, the grouping data may comprise an indication of the network location (e.g. network address) of the client and/or historical activity of the client (e.g. its data block caching activity). In respect of the applications, the grouping data may comprise an indication of the type of application. In respect of the users, the grouping data may comprise an indication of the type of user (e.g. profession or activity) and/or of an organisation with which the user is associated (e.g. employer). Conveniently, the respective grouping data may be included in the respective data access profile. The grouping data may be provided to (e.g. by a user) or determined by (as applicable) the respective client cache manager or the server cache manager as is convenient.

Advantageously, the cache system is configured to use the grouping data to assign clients to one or more groups based on network location, preferably grouping clients that are deemed to be relatively close to one another on the network (any suitable criteria can be used to measure closeness, e.g. connection speed between clients and/or network address comparison). Preferably, the cache system is configured to use the grouping data to assign clients to one or more groups based on patterns of application usage. This combination of knowledge allows the system to optimize cache sharing based on the highest priority information shared among users with similar patterns of usage and at similar locations.

Typically, each client cache is configured to store a finite number of data blocks. When a client cache encounters a data block for the first time, it is configured to store the new data block in the respective client cache. In one embodiment, the respective client cache manager is arranged to add data blocks to or remove data blocks from the respective client cache in a first in first out manner, the cache having a first data block location, a last block location and one or more data block locations in between. New data blocks are added at the first location, existing data blocks being displaced by one location towards the last location. If the cache is full, addition of a new block causes the cache entry at the last location to be removed from the cache (e.g. overwritten). Alternative methods for determine which data blocks to remove from the cache when full may be employed, e.g. based on respective access data of the data blocks and/or the respective data access profile. To this end it is preferred that each client cache manager maintains access data in respect of each data block stored in the respective client cache, said access data being indicative of one or more access characteristics of the respective data block, e.g. frequency of access and/or regularity of access and/or how recently the respective data block has been accessed.

Advantageously, when a data block is encountered by a client cache manager for a second, or subsequent, time, said access data is updated (conveniently by the respective client cache manager or server cache manager). Preferably, as a data block is encountered for the second, or subsequent, time it is promoted in the cache with respect to the other data blocks in the cache. Promotion may involve moving the location of the respective cache entry towards the first data location. This may be achieved on the basis of comparison of the respective access data of the re-occurring block with respect to one or more of the other blocks in the client cache.

A second aspect of the invention provides a client-server communication system comprising the cache system of the first aspect of the invention.

A third aspect of the invention provides a method of sharing data blocks in a cache system for use with a plurality of clients in communication with at least one server across a communications network, wherein each client is associated with a respective client cache memory and configured to store in said respective cache memory at least some data blocks that are, in use, transmitted between said client and said at least one server, the cache system comprising a plurality of cache managers including a respective client cache manager for managing each client cache memory, the method comprising maintaining, in respect of each client cache memory, a respective data profile containing data that is indicative of the relative significance of data blocks stored in the respective client cache memory; communicating to each of said client cache managers data that identifies data blocks stored in the respective client cache memory of each of the other client cache managers that are determined from the respective data profile to be relatively significant; and sharing at least some of said relatively significant data blocks amongst at least some of said clients.

Preferred systems embodying the invention provide collaborating users, whose respective clients are relatively close to one another on the network, an optimized cache system based on determinations as to high-priority cached data available within the respective cache memory of the clients of the other users. Advantageously, it is bi-directional, and works with dynamic data. Unlike other cache mechanisms, because the preferred system knows the number of users and frequency of access of cached content, it has the ability to optimize the cache for a particular set of users who are accessing similar content across the network via their respective clients, particularly when those users' clients are based near each other on one side of the network.

Preferred embodiments support a caching method that can be used to provide an optimized block cache for groups of clients on a network. Unlike other techniques such as peer-to-peer file sharing, it optimizes caching based on determined patterns of previous user-to-application interactions, and advantageously also on knowledge of the network quality and topology between users (clients) and the applications (servers) being accessed.

Further advantageous features of the invention will become apparent to those ordinarily skilled in the art upon review of the following description of a specific embodiment and with reference to the accompanying drawings.

### Brief Description of the Drawings

An embodiment of the invention is now described by way of example in which like numerals are used to indicate like parts and in which:
Figure 1 is a schematic view of a conventional client-server system;
Figure 2 is a schematic view of a client-server computer system comprising a multi-user cache system embodying one aspect of the invention;
Figure 3 is a schematic view of the multi-user cache system shown in Figure 2; and
Figure 4 is a schematic view of a cache memory suitable for use in the cache system shown in Figures 2 and 3.

### Detailed Description of the Drawings

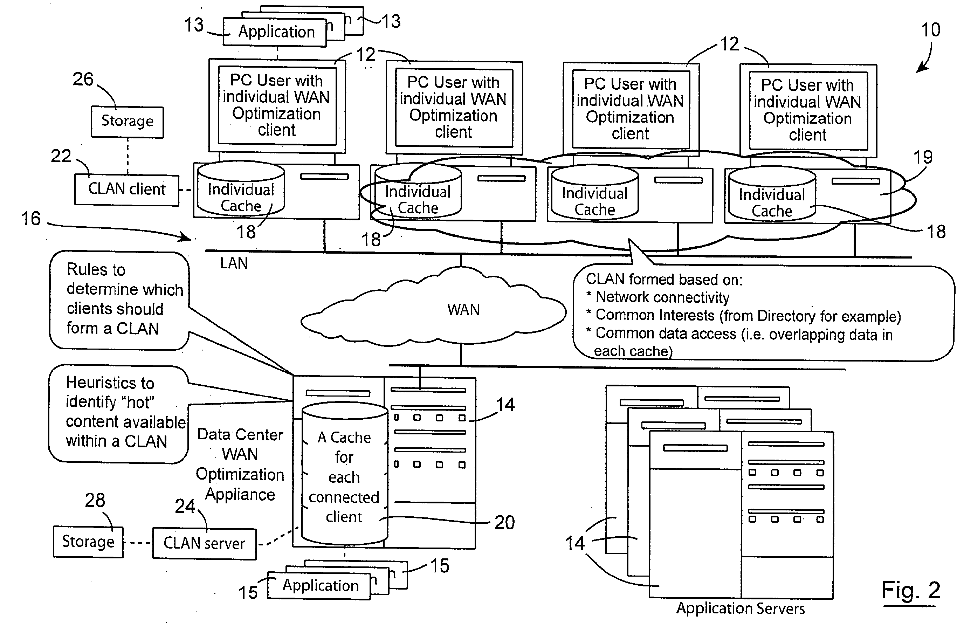

Referring now to Figure 2 of the drawings, there is shown, generally indicated as 10, a computer system comprising a cache system embodying one aspect of the present invention. The computer system 10 comprises a server 14 (although more than one server could be provided) and a plurality of clients 12 capable of communication with one another via a network 16. The server 14 typically comprises one or more computers configured, e.g. by supporting suitable computer software, to act as a server to the clients 12 across the network 16. The term "server" as used in the present example refers to the respective server-enabled computer(s), although it will be understood that "server" may also refer to server computer software. The server 14 supports one or more software applications 15, comprising computer program(s) accessible by the clients 12. More than one server may be provided, each supporting one or more applications, as is indicated by servers 14' in Figure 2.

Each client 12 typically comprises a computer configured e.g. by supporting suitable computer software, to act as a client to the server 14 across the network 16. The term "client" in the present example refers to the respective client-enabled computer(s), although it will be understood that "client" may also refer to client computer software. Each client 12 supports one or more software applications 13, comprising computer program(s), that may from time to time require access to the application(s) running on the servers 14, 14' via the network 16. The clients 12 are operated by respective users, e.g. human users (not shown) to access the remote applications as required.

The network 16 may comprise any suitable communications network, for example including one or more of a computer network (e.g. WAN, LAN and/or the internet), data network, telecommunications network (including telephone networks), and using any suitable technology or combination of technologies, e.g. wired, wireless, electronic and/or optical. In Figure 2, the network 16 is shown by way of example as comprising a LAN by which the clients 12 are connected, the LAN being in communication with a WAN, which may for example comprise the internet, to allow communication between the clients 12 and server 14, 14'. Where there are more than one servers, the servers 14, 14' may be interconnected by a second LAN or other server side network.

In the preferred embodiment, each client 12 includes, or has access to, respective data storage means in the preferred form of a cache memory 18. In use, data blocks that are to be received by or sent from the respective client 12 (e.g. under the action of one or more applications running on the client) via the network 16 are stored in the cache 18. In alternative embodiments, each client 12 may include, or have access to, more than one respective cache memory or other data storage. The server 14 includes, or has access to, respective data storage means in the preferred form of a cache memory 20. In use, data blocks that are to be received by or sent from the server 14 (e.g. under the action of one or more applications running on the server) via the network 16 are stored in the cache 20. In alternative embodiments, the server 14 may include, or have access to, more than one respective cache memory or other data storage means. In preferred embodiments, a respective cache 20 is maintained for each client 12, the server 14 storing data blocks received from and transmitted to respective clients in the respective cache 20. Similarly, where there is more than one server, each server may have, or have access to a respective one or more caches, or other data storage devices. It will be understood that more than one cache can be maintained in a common storage area. Accordingly, each cache need not necessarily be maintained in a separate storage device.

In preferred embodiments, the cache system comprises, in addition to the caches 18, 20, a respective client cache management component 22 (only one shown in Figure 2, designated "CLAN client") for each client 12, and a server cache management component 24 for the server 14 (designated as "CLAN server" in Figure 2). Where there is more than one server, a respective CLAN server 24 may be provided for each server. In alternative embodiments, the, or each, CLAN client 22 may be co-operable (in the manner described hereinafter) with more than one client 12 and/or, where there are multiple servers, the, or each, CLAN server 24 may be co-operable (in the manner described hereinafter) with more than one server 14. Typically each of the components 22, 24 is implemented by computer program(s) that, conveniently, runs on the respective client 12 or server 14, although alternatively, the components 22, 24 may be made available to the respective client 12 or server 14 as an external resource, e.g. via the network 16. Typically, each component 22, 24 has access to a storage device or other data storage means 26, 28, which may conveniently be provided by local memory of the respective client 12 or server 14. The cache system implements a shared caching mechanism for a plurality of users (i.e. a plurality of clients assuming that each user is associated with a respective client), the users/clients preferably being allocated into groups as is described in more detail hereinafter. It is assumed that the users access, in use, a set of one or more applications supported by the server 14, across network 16. Advantageously, the shared caching mechanism is implemented without a shared software appliance on the client side of the network.

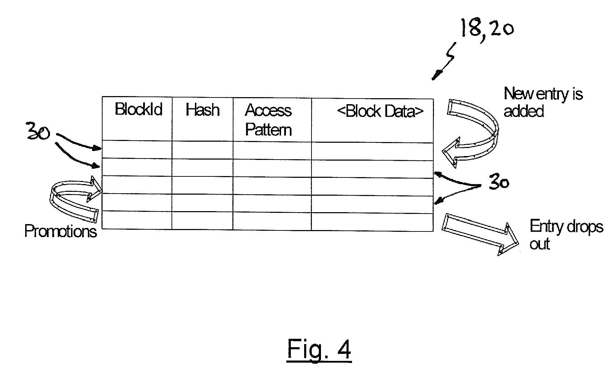

During use, the respective clients 12 interact with the server 14, 14' via the respective cache management component 22. The component 22 itself may be described as a client to the relevant server 14, 14'. Hence, requests made by an application 13 running on the client 12 from an application 15 supported by the server 14, and responses from the server application 15, are routed through the respective CLAN client component 22. As the CLAN client 22 encounters data from a client application 13 for the first time, it caches the data in blocks in the respective cache memory 18. Advantageously, each data block is stored in the cache 18 is association with a unique identifier ("Blockld" in Figure 4). The CLAN client 22 routes the request through the CLAN Server 24. The CLAN server 24 also caches the data in corresponding blocks (in its associated cache 20), advantageously with the same unique identifiers, and then forwards the requests to the target application 15.

In the preferred embodiment, responses from the application 15 are handled the same way but in reverse: the CLAN server 24 receives the response from the application 15 and caches the response data in blocks in the server's cache 20, advantageously with respective unique identifiers. The CLAN server 24 then sends the response to the CLAN client 22, which caches the response data in blocks, advantageously with corresponding unique identifiers, before sending the response to the requesting application 13.

During subsequent use, e.g. as a user continues to access the application 15 via the application 13, when a data block is encountered by the CLAN client 22 or the CLAN server 24 that it has already encountered and is present in the respective cache 18, 20, the cache system (i.e. the CLAN client 22 or CLAN server 24 as applicable) advantageously transfers the respective block identifier across the network 16 instead of the data block itself, thereby optimizing the transfer across the network in either direction.

The preferred cache system provides improved efficiency among multiple users/clients that access the same or similar data (e.g. because they access the same or similar applications 15) across the network 16. By means of, in particular, the respective CLAN clients 22 and/or the CLAN server 24, the cache system is able to determine what data each client 12 is accessing and the frequency of access of each data block. Using this information, the cache system, e.g. at the respective CLAN client 22 and/or the CLAN server 24, is configured to create a data access profile for each client 12. Alternatively, or in addition, a respective profile may be created for each application 13 running on the respective client devices 12. The access profiles may be stored in the respective data storage 26 and/or data storage 28 as is convenient, or on any other convenient memory. In the preferred embodiment, the access profiles are derived from access pattern data created in respect of each data block stored in the respective caches 18, 20. The access pattern data comprises data indicating the frequency with which the respective data block is accessed with respect to the respective cache 18, 20, e.g. the frequency with which the respective data block is required to be transferred to and/or from the relevant applications 13, 15 via the respective cache 18, 20. The frequency data may take any suitable form, e.g. an absolute count of the number of accesses, a count of the number of accesses during a specified time period, or a simple indication as to whether the data block has been requested more than once. Conveniently, the respective access pattern data is stored in the respective cache 18, 20 in association with the respective data block. In preferred embodiments, the access profiles are compiled in respect of the respective caches 18 at the client side (i.e. in respect of the clients 12), and not the server side. Conveniently, the compilation of the profiles is performed at the server-side of the system, e.g. by the CLAN server 24, and may conveniently be stored locally to the server 24, e.g. in data storage 28.

The access pattern data may be created by the respective CLAN client 22, or may be created by the CLAN server 24, as is convenient. The latter option assumes that the CLAN server 24 maintains a respective cache 20 for each client 12. The data access profile may be created by the respective CLAN client 22, or may be created by the CLAN server 24, as is convenient. Where necessary, the CLAN client 22 may communicate respective access pattern data and/or the respective data access profile to the CLAN server 24 and/or to one or more of the other CLAN clients 22.

In any event, in the preferred embodiment, each data access profile includes data from which one or more relatively significant, e.g. frequently used, data blocks ("hot blocks") in the respective cache 18 of the client 12 can be identified. These are preferably data blocks that are required to be transferred to and/or from the relevant applications 13, 15 with a relatively high frequency in comparison with other data blocks in the respective cache 18. For example a frequency threshold may be set above which a data block is deemed to be a "hot block". The frequency threshold may be an absolute threshold, or may be calculated relative to the average access frequency of blocks in the cache 18. "Hot blocks" may be determined by other suitable means, especially by measures of the relative importance or prominence of the block with respect to the other blocks in the cache, or with respect to a relevant absolute measure.

Each data access profile preferably also comprises data indicating how common the respective data blocks in the cache 18 are across all of the respective caches 18 of the respective clients 12 in the system, or of a group of clients 12 within the system. For example, the data may be indicative of the number of relevant caches 18 in which the respective block is present. Conveniently, this data may be compiled by the CLAN server 24, which preferably maintains a respective cache 20 for each client 12 and so has knowledge of the data transferring activity of the clients 12 accessing applications 15 through it, and so can determine how common each data block is across the relevant clients 12. Alternatively, or in addition, this data can be compiled by the respective CLAN clients 22 and communicated to the other CLAN clients 22, or to the CLAN server 24 for communication to the other CLAN clients 22. The data access profiles may be stored in any convenient manner, e.g. in local memory to the CLAN clients 22 and/or CLAN server 14, as applicable. Optionally, the data access profile for a given client 12 may be distributed between one or more CLAN client 22 and/or one or more CLAN servers 24. For example, the access frequency data may be calculated and stored at the CLAN client, while the indicator of how common a block is across all of the clients may be calculated and stored at the CLAN server.

Preferably, the cache system holds grouping data indicating one or more characteristics of the clients 12, the application(s) 13 running on the clients 12 and/or of the users of the clients 12, and is configured to use the grouping data to arrange the clients 12 into one or more groups of one or more clients 12. For example, in respect of the clients 12, the grouping data may comprise an indication of the network location (e.g. network address) of the client 12 and/or the historical activity of the client 12 (e.g. its data block caching activity). In respect of the applications 13, the grouping data may comprise an indication of the type of application. In respect of the users, the grouping data may comprise an indication of the type of user (e.g. profession or activity) and/or of an organisation with which the user is associated (e.g. employer). Conveniently, the respective grouping data may be included in the respective data access profile. The grouping data may be provided to (e.g. by a user) or determined by (as applicable) the respective CLAN client 22 or the CLAN server 24 as is convenient. In Figure 2, a group is indicated by way of example by cloud 19.

In the preferred embodiment, the cache system uses the grouping data to assign clients 12 to one or more groups based on network location, preferably grouping clients that are deemed to be relatively close to one another on the network 16 (any suitable criteria can be used to measure closeness, e.g. connection speed between clients and/or network address comparison). Preferably, the cache system uses the grouping data to assign clients 12 to one or more groups based on patterns of application (13 and/or 15) usage, which may for example be determined by the abovementioned application, user and/or activity based grouping data. This combination of knowledge allows the system to optimize cache sharing based on the highest priority information shared among users with similar patterns of usage and at similar locations.

During use, as each data request or response is made across the network 16, the respective CLAN client or server 22, 24 breaks the data being transferred into blocks. For each data block, the CLAN client or server 22, 24 queries the respective cache 18, 20 to determine if the data block has been encountered before, i.e. if it is present in the cache. A data block that has not been encountered before is cached in the respective caches 18, 20, preferably the respective caches on both the server side and client side of the network 16. Typically, the respective CLAN client or server 22, 24 performs a hash function on each data block to produce a hash value for the data block. The hash value is preferably stored in the respective cache 18, 20 in associate with the cache entry for the block. The hash value is smaller (in terms of bits/bytes) that the data block itself and this facilitates searching the cache to determine if a data block is present.

Figure 4 shows a schematic representation of the preferred cache 18, 20, from which it can be seen that each cache entry 30 comprises the block data, a respective block ID, a respective access pattern and a respective hash value.

As new data blocks are added to the cache 18, 20, they are given (by the CLAN client 22 or server 24 as applicable) a new block identifier, and a unique hash value is generated. This information stored in association with the actual block data. Each cache 18, 20 has a finite size and so can store a finite number of data blocks (the number depending on the relative size of the cache and the blocks). In one embodiment, data blocks are added to or removed from the cache in a first in first out manner, the cache having a first data block location, a last block location and one or more data block locations in between. New data blocks are added at the first location, existing data blocks being displaced by one location towards the last location. If the cache is full, addition of a new block causes the cache entry at the last location to be removed from the cache (e.g. overwritten). Alternative methods for removing cache entries from the cache when full may be employed, e.g. based on the respective access patterns of the data blocks and/or the respective data access profile.

If a data block is encountered for a second, or subsequent, time, its access pattern data is updated (conveniently by the respective CLAN client 22 or server 24). The access pattern data allows the cache system to hold knowledge of how a data block is being accessed overtime. The access pattern data may, for example, provide an indication of hits by hour for the last day. Alternatively or in addition, the access pattern data may provide an indication of hits (accesses) by hour for the last day, by day for the last week, by week for the last month and/or by month for the last year, and so on. This approach allows easy management of the data overtime and the identification of both short term and long term trends to enable patterns to be seen and used to keep the cache content relevant to the users' activities.

Advantageously, as a data block is encountered for the second, or subsequent, time it is promoted in the cache with respect to the other cache entries. Promotion may involve moving the location of the respective cache entry towards the first data location. This may be achieved on the basis of the respective access pattern data (which is updated to reflect the re-occurrence of the data block) of the re-occurring block with respect to one or more of the other blocks in the cache 18, 20. Hence, the CLAN client 22 and/or CLAN server 24 (as applicable) may update the positions of the cache entries 30 in a respective cache based on the respective access pattern data and/or other component of the respective data access profile and/or other criteria. The updating of the cache entries may be performed each time a data block is handled by the client 22 or server 24, or at any other convenient interval or event. This ensures that data blocks that are recurrent are kept in the respective cache 18, 20; whereas data blocks that are less significant, e.g. have not been seen for some time, are removed from the cache. In preferred embodiments, each CLAN client 22 is responsible, preferably solely responsible, for maintaining its own cache 18.

In the preferred cache system, therefore, data is maintained in respect of the content of the respective caches 18, 20 from which the following can be determined: access patterns overtime of each data block; whether a data block has been encountered by more than one client 12 (and /or optionally how many clients have encountered it); and preferably how fresh a block of data is (e.g. an indication of its relative location in the cache with respect to the first and last locations, optionally in combination with the respective access pattern).

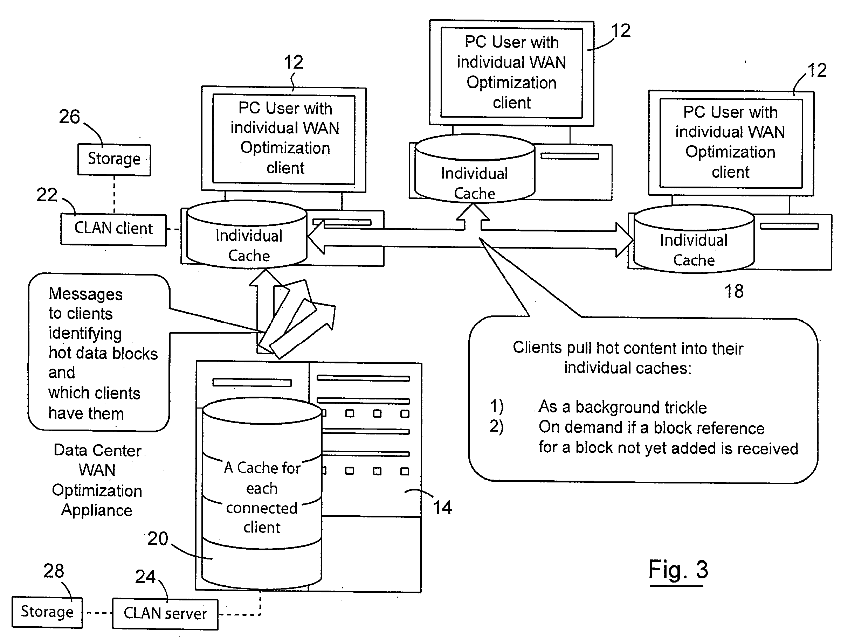

Referring now in particular to Figures 2 and 3, the cache system uses some or all of this data to determine which data blocks (and optionally the respective other components of the respective cache entry) should be shared amongst the clients 12, in particular the clients 12 belonging to the same group. The cache system may support the implementation of configurable rules for determining when data blocks should be shared among clients 12. Conveniently, the determination of which data blocks are to be shared is made by the CLAN server 24. Alternatively or in addition, each CLAN client 22 may make the determination in respect of the content of its own cache 18.

Once cache content that is suitable for sharing has been identified, the cache system is configured to inform the relevant clients 12 (e.g. the clients 12 in a respective group), and in particular the respective CLAN clients 22, that one or more specific data blocks can be obtained from one or more other clients 12, e.g. the other clients in the same group. Conveniently, the CLAN server 24 may inform the relevant clients 12. Alternatively, or in addition, the clients 12 may inform one another as applicable.

In preferred embodiments, one or more of the following communications mechanisms may be used: (1) CLAN server 24 identifies to each CLAN client 22 the hot (significant) data blocks in the CLAN system, i.e. significant blocks held in the respective caches of other clients 12 in the system, and in particular within the respective CLAN group; (2) CLAN clients 12 identify to each their own hot blocks, and/or ask each other what hot blocks they have; and/or (3) CLAN Server 24 identifies to one (or more) CLAN client 22 all the hot blocks, and those client(s) communicate this information to the other CLAN clients 22 in the system/group.

The preferred cache system allows clients 12 to build up cache entries from other clients 12 in one or more of the following ways:
- The CLAN server 24 can communicate with a CLAN client 22 and indicate which data blocks are worth caching (from the data blocks available within the respective group in the preferred embodiment).
- Each CLAN client 22 can poll one or more other CLAN clients 22 (e.g. those within its group), asking them to send or identify data blocks that should be shared.
- CLAN clients 22 can hold references (which may or may not be the same as the BlockID) to data blocks available from other clients 22, along with information on which clients 12 have the respective data blocks.
   ∘ A CLAN client 22 may request data blocks from one or more other CLAN clients 22, and effectively warm its own cache with the shared block
   ∘ A CLAN client alternatively, or in addition, can wait to be asked by another client 22 to transfer or receive a cache reference (or the data block itself) and act "on demand". If retrieving a cache reference, the CLAN client 22 can retrieve the relevant data block from another CLAN client 22 that has already stored the block. If transferring a cache reference, the system can communicate the reference to the CLAN server 24 without actually obtaining the block from the relevant CLAN client 22 (since the preferred CLAN server 24 holds all blocks for all clients 12)

Optionally, in the event that a CLAN client 22 from another CLAN client 22 (and/or the respective client cache memory) a cache reference to a data block (which typically is not already stored by the first CLAN client), the other client cache manager may be caused to, for example by the CLAN server 24, to send the relevant data block to the first CLAN client without the first CLAN client having to request it. The CLAN client may be configured to wait for a threshold period to receive the data block after having received the cache reference and, if it is not received within that period, to request the data blocks from the other CLAN client.

When it is necessary to obtain a data block from another client 12, the cache system knows one or more clients 12 from which the block can be obtained. The CLAN client 22 requiring the block may communicate directly with a CLAN client 22 with the block, optionally deciding which CLAN client 22 to contact based on the best connection speed available (where more than one client 22 has the block).

The CLAN clients 22 and CLAN server 24 may store data concerning the availability of shared data blocks in the respective storage 26, 28, or other convenient location.

By way of example, the rules, or criteria, which may be used to identify cache content to be shared may include one or more of the following:
1) Data blocks that are accessed regularly (but not necessarily frequently) by one or more clients 12.
2) Data blocks that have been accessed relatively frequently within a given time period (typically in the recent past) by one or more clients
3) Data blocks that are subject to a significant change in access pattern (e.g. an increase in occurrence above a threshold amount) in respect of at least one but preferably two or more clients 12 (which may suggest that the block will soon be accessed by other clients 12).

Advantageously, the rules or criteria for identifying shareable data blocks can be modified in live operation based on the success of these heuristics. Popular content (i.e. accessed by more than one client 12) is typically regarded as "hotter" than content accessed by only a single client 12.

Preferably, space in the respective cache 18 is reserved for each user's personal content to ensure that the content he or she has recently accessed is not totally displaced by content from other users who may not have similar interests.

It is advantageous that each group of CLAN clients 22 is configured correctly, with users who have the same, or similar, patterns of access, and are located near to each other on the network 16. This allows for cache sharing between the respective clients 12, without unduly impacting the network connections to the remote applications.

The preferred cache system may use one or more of the following information as grouping data with which to create client groups:
- Any shared NAT address which the clients 12 are connecting from (NAT is a mechanism where multiple users at a location are presented to the network as a single IP address)
- Any tagging (a tag may provide an indication of user type) configured for the clients 12, or IP addresses.
- The network path from the client 12 to the CLAN server 14 (this may include knowledge of network topology, and/or network hops across the network)
- Broadcast response times between clients 12 on a single network
- Access patterns on data blocks each client 12 has transferred

In preferred embodiments, the cache system uses some or all of this information to determine the groups of clients 12. Any suitable rules may be supported for assessing the grouping data. Preferably, the cache system has the ability to form single groups of common clients 12, or to sub-divide groups into sub groups who will then share caching. Examples of business rules for forming groups may include one or more of:
1. Job titles in corporate Directories (such as Microsoft's Active Directory)
2. Location codes in corporate Directories (such as Microsoft's Active Directory)
3. Organizational units (again from Directories)
4. Arbitrary based on tagging individual users with specific tags
5. Combinations of the above, e.g. members of the same organizational unit with the same geographical location
6. Dynamic, i.e. based purely on current location in the network determined by IP address.

Using historical data access patterns to help build a group provides an advantageous adaptive grouping mechanism that allows the cache system to optimize based on users with similar interests and access patterns over a period of time.

## Claims

1. A cache system for use with a plurality of clients (12) in communication with at least one server (14) across a communications network (16), wherein each client is associated with a respective client cache memory (18) and configured to store in said respective cache memory at least some data blocks (30) that are, in use, transmitted between said client and said at least one server, the cache system comprising a plurality of cache managers including a respective client cache manager (22) for managing each client cache memory, wherein one or more of said cache managers is arranged to maintain, in respect of each client cache memory, a respective data profile containing data that is indicative of the relative significance of data blocks stored in the respective client cache memory, and wherein said one or more of said cache managers is arranged to cause data that identifies data blocks stored in the respective client cache memory of each of the other client cache managers that are determined from the respective data profile to be relatively significant to be communicated to each of said client cache managers, and wherein said client cache managers are arranged to share at least some of said relatively significant data blocks.

2. A cache system as claimed in claim 1, wherein said communicated data identifies not only the respective data block(s) (30), but also the or each other client cache memory (18) from which the respective data block(s) are available.

3. A cache system as claimed in claim 1 or 2, wherein said plurality of cache managers includes at least one server cache manager (24) arranged to manage at least one server cache memory (20) associated with said at least one server.

4. A cache system as claimed in claim 3, wherein the, or each, server cache manager (24) and/or said respective client cache managers (22) is arranged to maintain respective data profiles, or at least part of respective data profiles, in respect of said client cache memories (18), said data profiles including data that is indicative of or determined by the storage and/or retrieval of data blocks (30) in and from said at least one server cache memory (20) and/or from said respective server cache memories.

5. A cache system as claimed in claim 4, wherein said server cache manager(s)(24) is arranged to communicate to at least one, preferably all, of said client cache managers (22) said data identifying relatively significant data blocks (30) stored in said other client cache memories (18).

6. A cache system as claimed in claim 5, wherein one or more of said client cache managers (22) is arranged to communicate said data identifying relatively significant data blocks to one or more others of said client cache managers (22).

7. A cache system as claimed in claim 5 or 6, wherein each client cache manager (22) is arranged to communicate with one or more of the other client cache managers (22) in order to obtain from said other client cache mangers and/or the respective client cache memory (18) one or more of said data blocks (30) and/or a reference to one or more of said data blocks identified as being relatively significant.

8. A cache system as claimed in any one of claims 5 to 7, wherein each client cache manager (22) is arranged to obtain one or more relatively significant data blocks (30) from the client cache memory (18) of another client (12), and to store the obtained data block(s) in its own client cache memory.

9. A cache system as claimed in any one of claims 4 to 8, wherein said data profile includes data indicative of the respective frequency with which respective data blocks (30) stored in the respective client cache memory (18) are accessed, said data profile preferably also including data indicative of any one or more of: how common each respective data block is amongst the respective client cache memories; how recently respective data blocks stored in the respective client cache memory have been accessed; and how regularly respective data blocks stored in the respective client cache memory are been accessed.

10. A cache system as claimed in any preceding claim, further arranged to hold grouping data indicating one or more characteristics of the clients (12), and/or application(s) (13) supported by the clients, and/or of the users of the clients, wherein the cache system is configured to use the grouping data to arrange the clients into one or more groups of one or more clients, wherein, in respect of the clients, said grouping data preferably comprises an indication of the network location of the client and/or activity of the client, and wherein, in respect of said applications, said grouping data may comprise an indication of the type of application, and wherein, in respect of the users, said grouping data may comprise an indication of the type of user and/or of an organisation with which the user is associated.

11. A cache system as claimed in claim 10, wherein the respective grouping data is included in the respective data profile.

12. A cache system as claimed in claim 10 or 11, wherein the cache system is configured to use the grouping data to assign clients (12) to one or more groups based on network location and or patterns of application usage.

13. A cache system as claimed in any preceding claim, wherein each client cache memory (18) is configured to store a finite number of data blocks (30) and wherein, when a client cache manager (22) encounters a data block for the first time, it is configured to store the data block in the respective client cache memory (18), and wherein each client cache manager maintains access data in respect of each data block stored in the respective client cache memory (18), said access data being indicative of one or more access characteristics of the respective data block, and wherein, when a data block is encountered by a client cache manager for a second, or subsequent, time, said access data is updated, and wherein, preferably, as a data block is encountered for the second, or subsequent, time the respective cache manager is arranged to promote said data block in the respective cache with respect to the other data blocks in the cache.

14. A cache system as claimed in any preceding claim, wherein, in the event that a client cache manager (22) receives from another of said client cache managers and/or the respective client cache memory (18), as applicable, a reference to one or more of said data blocks (30) identified as being relatively significant, said another client cache manager is caused to send said one or more of said data blocks to said client cache manager without said client cache manager having to request it.

15. A method of sharing data blocks in a cache system for use with a plurality of clients (12) in communication with at least one server (14) across a communications network (16), wherein each client is associated with a respective client cache memory (18) and configured to store in said respective cache memory at least some data blocks (30) that are, in use, transmitted between said client and said at least one server, the cache system comprising a plurality of cache managers including a respective client cache manager (22) for managing each client cache memory, the method comprising maintaining, in respect of each client cache memory, a respective data profile containing data that is indicative of the relative significance of data blocks stored in the respective client cache memory; communicating to each of said client cache managers data that identifies data blocks stored in the respective client cache memory of each of the other client cache managers that are determined from the respective data profile to be relatively significant; and sharing at least some of said relatively significant data blocks amongst at least some of said clients.

## Patentansprüche

1. Cache-System zur Verwendung mit mehreren Clients (12) in Kommunikation mit wenigstens einem Server (14) über ein Kommunikationsnetz (16), wobei jeder Client mit einem jeweiligen Client-Cache-Speicher (18) assoziiert und zum Speichern, in dem genannten jeweiligen Cache-Speicher, von wenigstens einigen Datenblöcken (30) konfiguriert ist, die beim Gebrauch zwischen dem genannten Client und dem genannten wenigstens einen Server übertragen werden, wobei das Cache-System mehrere Cache-Manager einschließlich eines jeweiligen Client-Cache-Managers (22) zum Managen jedes Client-Cache-Speichers umfasst, wobei einer oder mehrere der genannten Cache-Manager zum Führen, mit Bezug auf jeden Client-Cache-Speicher, einer jeweiligen Datendatei ausgelegt ist, die Daten enthält, die die relative Signifikanz von in dem jeweiligen Client-Cache-Speicher gespeicherten Datenblöcken anzeigen, und wobei die genannten ein oder mehreren der genannten Cache-Manager ausgelegt sind zum Bewirken, dass Daten, die in dem jeweiligen Client-Cache-Speicher von jedem der anderen Client-Cache-Manager gespeicherte Datenblöcke identifizieren, bei denen anhand des jeweiligen Datenprofils festgestellt wird, dass sie relativ signifikant sind, zu jedem der genannten Client-Cache-Manager kommuniziert zu werden, und wobei die genannten Client-Cache-Manager zum gemeinsamen Nutzen von wenigstens einigen der genannten relativ signifikanten Datenblöcke ausgelegt sind.

2. Cache-System nach Anspruch 1, wobei die genannten kommunizierten Daten nicht nur den/die relevanten Datenblock/-blöcke (30), sondern auch den oder jeden anderen Client-Cache-Speicher (18) identifizieren, von dem der/die jeweilige(n) Datenblock/-blöcke zur Verfügung steht/-en.

3. Cache-System nach Anspruch 1 oder 2, wobei die genannten mehreren Cache-Manager wenigstens einen Server-Cache-Manager (24) ausgelegt zum Managen von wenigstens einem mit dem genannten wenigstens einen Server assoziierten Server-Cache-Speicher (20) beinhalten.

4. Cache-System nach Anspruch 3, wobei der oder jeder Server-Cache-Manager (24) und/oder die genannten jeweiligen Client-Cache-Manager (22) zum Führen von jeweiligen Datenprofilen oder wenigstens eines Teils von jeweiligen Datenprofilen in Bezug auf die genannten Client-Cache-Speicher (18) ausgelegt sind, wobei die genannten Datenprofile Daten beinhalten, die das Speichern und/oder Abrufen von Datenblöcken (30) in und aus dem genannten wenigstens einen Server-Cache-Speicher (20) und/oder aus den genannten jeweiligen Server-Cache-Speichern anzeigen oder dadurch bestimmt werden.

5. Cache-System nach Anspruch 4, wobei der/die genannte(n) Server-Cache-Manager (24) zum Übermitteln der genannten Daten, die in den genannten anderen Client-Cache-Speichern (18) gespeicherte relativ signifikante Datenblöcke (30) identifizieren, zu wenigstens einem, vorzugsweise allen, genannten Client-Cache-Manager(n) (22) ausgelegt ist/sind.

6. Cache-System nach Anspruch 5, wobei ein oder mehrere der genannten Client-Cache-Manager (22) zum Kommunizieren der genannten relativ signifikante Datenblöcke identifizierenden Daten zu einem oder mehreren anderen der genannten Client-Cache-Manager (22) ausgelegt sind.

7. Cache-System nach Anspruch 5 oder 6, wobei jeder Client-Cache-Manager (22) zum Kommunizieren mit einem oder mehreren der anderen Client-Cache-Manager (22) ausgelegt ist, um von den genannten anderen Client-Cache-Managern und/oder dem jeweiligen Client-Cache-Speicher (18) einen oder mehrere der genannten Datenblöcke (30) und/oder eine Referenz auf einen oder mehrere der genannten, als relativ signifikant identifizierten Datenblöcke zu erhalten.

8. Cache-System nach einem der Ansprüche 5 bis 7, wobei jeder Client-Cache-Manager (22) zum Einholen von einem oder mehreren relativ signifikanten Datenblöcken (30) aus dem Client-Cache-Speicher (18) eines anderen Client (12) und zum Speichern des/der eingeholten Datenblocks/-blöcke in seinem eigenen Client-Cache-Speicher ausgelegt ist.

9. Cache-System nach einem der Ansprüche 4 bis 8, wobei das genannte Datenprofil Daten beinhaltet, die die jeweilige Häufigkeit anzeigen, mit der auf jeweilige in dem jeweiligen Client-Cache-Speicher (18) gespeicherte Datenblöcke (30) zugegriffen wird, wobei das genannte Datenprofil vorzugsweise auch Daten beinhaltet, die eines oder mehrere der Folgenden anzeigen: wie häufig jeder jeweilige Datenblock unter den jeweiligen Client-Cache-Speichern ist; wie kurz zurückliegend auf jeweilige in dem jeweiligen Client-Cache-Speicher gespeicherte Datenblöcke zugegriffen wurde; und wie regelmäßig auf jeweilige im jeweiligen Client-Cache-Speicher gespeicherte Datenblöcke zugegriffen wird.

10. Cache-System nach einem vorherigen Anspruch, ferner ausgelegt zum Halten von Gruppierungsdaten, die eine oder mehrere Charakteristiken der Clients (12) anzeigen, und/oder Anwendungen (13), die von den Clients und/oder den Benutzern der Clients unterstützt werden, wobei das Cache-System zum Benutzen der Gruppierungsdaten zum Anordnen der Clients zu einer oder mehreren Gruppen von einem oder mehreren Clients konfiguriert ist, wobei in Bezug auf die Clients die genannten Gruppierungsdaten vorzugsweise eine Anzeige des Netzwerkortes des Client und/oder der Aktivität des Client beinhalten, und wobei in Bezug auf die genannten Anwendungen die genannten Gruppierungsdaten eine Anzeige des Anwendungstyps beinhalten können, und wobei in Bezug auf die Benutzer die genannten Gruppierungsdaten eine Anzeige des Typs von Benutzer und/oder einer Organisation beinhalten können, mit der der Benutzer assoziiert ist.

11. Cache-System nach Anspruch 10, wobei die jeweiligen Gruppierungsdaten im jeweiligen Datenprofil enthalten sind.

12. Cache-System nach Anspruch 10 oder 11, wobei das Cache-System zum Benutzen der Gruppierungsdaten zum Zuordnen von Clients (12) zu einer oder mehreren Gruppen auf der Basis von Netzwerkort und/oder Anwendungsgebrauchsmustern konfiguriert ist.

13. Cache-System nach einem vorherigen Anspruch, wobei jeder Client-Cache-Speicher (18) zum Speichern einer finiten Anzahl von Datenblöcken (30) konfiguriert ist und wobei ein Client-Cache-Manager (22) so konfiguriert ist, dass er, wenn er zum ersten Mal auf einen Datenblock trifft, den Datenblock im jeweiligen Client-Cache-Speicher (18) speichert, und wobei jeder Client-Cache-Manager Zugriffsdaten in Bezug auf jeden im jeweiligen Client-Cache-Speicher (18) gespeicherten Datenblock führt, wobei die genannten Zugriffsdaten eine oder mehrere Zugriffscharakteristiken des jeweiligen Datenblocks anzeigen und wobei, wenn ein Client-Cache-Manager zum zweiten, oder nachfolgenden, Mal auf einen Datenblock trifft, die genannten Zugriffsdaten aktualisiert werden, und wobei der jeweilige Cache-Manager vorzugsweise, wenn er zum zweiten oder nachfolgenden Mal auf einen Datenblock trifft, zum Fördern des genannten Datenblocks im jeweiligen Cache mit Bezug auf die anderen Datenblöcke in dem Cache ausgelegt ist.

14. Cache-System nach einem der vorherigen Ansprüche, wobei in dem Fall, dass ein Client-Cache-Manager (22) von einem anderen der genannten Client-Cache-Manager und/oder dem jeweiligen Client-Cache-Speicher (18), wie zutreffend, eine Referenz auf einen oder mehrere der genannten, als relativ signifikant identifizierten Datenblöcke (30) empfängt, bewirkt wird, dass der genannte andere Client-Cache-Manager die genannten ein oder mehreren der genannten Datenblöcke zu dem genannten Client-Cache-Manager sendet, ohne dass der genannte Client-Cache-Manager dies anfordern müsste.

15. Verfahren zum gemeinsamen Nutzen von Datenblöcken in einem Cache-System zur Verwendung mit mehreren Clients (12) in Kommunikation mit wenigstens einem Server (14) über ein Kommunikationsnetz (16), wobei jeder Client mit einem jeweiligen Client-Cache-Speicher (18) assoziiert und zum Speichern von wenigstens einigen Datenblöcken (30) in dem genannten jeweiligen Cache-Speicher konfiguriert ist, die beim Gebrauch zwischen dem genannten Client und dem genannten wenigstens einen Server übertragen werden, wobei das Cache-System mehrere Cache-Manager einschließlich eines jeweiligen Client-Cache-Managers (22) zum Managen jedes Client-Cache-Speichers umfasst, wobei das Verfahren das Führen, in Bezug auf jeden Client-Cache-Speicher, eines jeweiligen Datenprofils beinhaltet, das Daten enthält, die die relative Signifikanz von in dem jeweiligen Client-Cache-Speicher gespeicherten Datenblöcken anzeigen; Kommunizieren, zu jedem der genannten Client-Cache-Manager, von Daten, die Datenblöcke identifizieren, die in dem jeweiligen Client-Cache-Speicher jedes der anderen Client-Cache-Manager gespeichert sind, bei denen anhand des jeweiligen Datenprofils festgestellt wird, dass sie relativ signifikant sind; und gemeinsames Nutzen von wenigstens einigen der genannten relativ signifikanten Datenblöcke unter wenigstens einigen der genannten Clients.

## Revendications

1. Un système à mémoire tampon destiné à une utilisation avec une pluralité de clients (12) en communication avec au moins un serveur (14) par l'intermédiaire d'un réseau de communication (16), où chaque client est associé à une mémoire tampon client respective (18) et est configuré de façon à conserver en mémoire dans ladite mémoire tampon respective au moins certains blocs de données (30) qui sont, en utilisation, transmis entre ledit client et ledit au moins un serveur, le système à mémoire tampon comprenant une pluralité de gestionnaires de mémoire tampon comprenant un gestionnaire de mémoire tampon client respectif (22) destiné à la gestion de chaque mémoire tampon client, où un ou plusieurs desdits gestionnaires de mémoire tampon sont agencés de façon à entretenir, pour chaque mémoire tampon client, un profil de données respectif contenant des données qui sont indicatives de l'importance relative de blocs de données conservés en mémoire dans la mémoire tampon client respective, et où lesdits un ou plusieurs desdits gestionnaires de mémoire tampon sont agencés de façon à amener des données qui identifient des blocs de données conservés en mémoire dans la mémoire tampon client respective de chacun des autres gestionnaires de mémoire tampon client qui sont déterminés à partir du profil de données respectif être relativement importants de façon à être communiqués à chacun desdits gestionnaires de mémoire tampon client, et où lesdits gestionnaires de mémoire tampon client sont agencés de façon à partager au moins certains desdits blocs de données relativement importants.

2. Un système à mémoire tampon selon la Revendication 1, où lesdites données communiquées identifient non seulement le(s) bloc(s) de données respectif(s) (30) mais également la ou chaque autre mémoire tampon client (18) à partir de laquelle le(s) bloc(s) de données respectif(s) est(sont) disponible(s).

3. Un système à mémoire tampon selon la Revendication 1 ou 2, où ladite pluralité de gestionnaires de mémoire tampon comprend au moins un gestionnaire de mémoire tampon serveur (24) agencé de façon à gérer au moins une mémoire tampon serveur (20) associée audit au moins un serveur.

4. Un système à mémoire tampon selon la Revendication 3, où le, ou chaque, gestionnaire de mémoire tampon serveur (24) et/ou lesdits gestionnaires de mémoire tampon client respectifs (22) sont agencés de façon à entretenir des profils de données respectifs, ou au moins une partie des profils de données respectifs, pour lesdites mémoires tampons clients (18), lesdits profils de données contenant des données qui sont indicatives de ou déterminées par la conservation en mémoire et/ou la récupération de blocs de données (30) dans et à partir de ladite au moins une mémoire tampon serveur (20) et/ou à partir desdites mémoires tampons serveurs respectives.

5. Un système à mémoire tampon selon la Revendication 4, où ledit(lesdits) gestionnaire(s) de mémoire tampon serveur(s) (24) est(sont) agencé(s) de façon à communiquer à au moins un, de préférence la totalité, desdits gestionnaires de mémoire tampon client (22), lesdites données identifiant des blocs de données relativement importants (30) conservés en mémoire dans lesdites autres mémoires tampons clients (18).

6. Un système à mémoire tampon selon la Revendication 5, où un ou plusieurs desdits gestionnaires de mémoire tampon client (22) sont agencés de façon à communiquer lesdites données identifiant les blocs de données relativement importants à un ou plusieurs autres desdits gestionnaires de mémoire tampon client (22).

7. Un système à mémoire tampon selon la Revendication 5 ou 6, où chaque gestionnaire de mémoire tampon client (22) est agencé de façon à communiquer avec un ou plusieurs des autres gestionnaires de mémoire tampon client (22) afin d'obtenir desdits autres gestionnaires de mémoire tampon client et/ou de la mémoire tampon client respective (18) un ou plusieurs desdits blocs de données (30) et/ou une référence à un ou plusieurs desdits blocs de données identifiés être relativement importants.

8. Un système à mémoire tampon selon l'une quelconque des Revendications 5 à 7, où chaque gestionnaire de mémoire tampon client (22) est agencé de façon à obtenir un ou plusieurs blocs de données relativement importants (30) de la mémoire tampon client (18) d'un autre client (12), et à conserver en mémoire le(s) bloc(s) de données obtenu(s) dans sa propre mémoire tampon client.

9. Un système à mémoire tampon selon l'une quelconque des Revendications 4 à 8, où ledit profil de données contient des données indicatives de la fréquence respective à laquelle des blocs de données respectifs (30) conservés en mémoire dans la mémoire tampon client respective (18) sont accédés, ledit profil de données comprenant de préférence également des données indicatives de l'une quelconque ou plusieurs des caractères suivantes : le caractère commun de chaque bloc de données respectif parmi les mémoires tampons clients respectives, le caractère récent de l'accès à des blocs de données respectifs conservés en mémoire dans la mémoire tampon client respective et le caractère régulier de l'accès à des blocs de données respectifs conservés en mémoire dans la mémoire tampon client respective.

10. Un système à mémoire tampon selon l'une quelconque des Revendications précédentes, agencé en outre de façon à contenir des données de groupement indiquant une ou plusieurs caractéristiques des clients (12), et/ou une(des) application(s) (13) prise(s) en charge par les clients, et/ou des utilisateurs des clients, où le système à mémoire tampon est configuré de façon à utiliser les données de groupement de façon à agencer les clients en un ou plusieurs groupes d'un ou de plusieurs clients, où, pour les clients, lesdites données de groupement comprennent de préférence une indication de l'emplacement de réseau du client et/ou de l'activité du client, et où, pour lesdites applications, lesdits données de groupement peuvent comprendre une indication du type d'application, et où, pour les utilisateurs, lesdites données de groupement peuvent comprendre une indication du type d'utilisateur et/ou d'une organisation à laquelle l'utilisateur est associé.

11. Un système à mémoire tampon selon la Revendication 10, où les données de groupement respectives sont incluses dans le profil de données respectif.

12. Un système à mémoire tampon selon la Revendication 10 ou 11, où le système à mémoire tampon est configuré de façon à utiliser les données de groupement de façon à attribuer des clients (12) à un ou plusieurs groupes en fonction d'un emplacement de réseau et/ou de modèles d'utilisation d'applications.

13. Un système à mémoire tampon selon l'une quelconque des Revendications précédentes, où chaque mémoire tampon client (18) est configurée de façon à conserver en mémoire un nombre fini de blocs de données (30) et où, lorsqu'un gestionnaire de mémoire tampon client (22) rencontre un bloc de données pour la première fois, il est configuré de façon à conserver en mémoire le bloc de données dans la mémoire tampon client respective (18), et où chaque gestionnaire de mémoire tampon client entretient des données d'accès pour chaque bloc de données conservé en mémoire dans la mémoire tampon client respective (18), lesdites données d'accès étant indicatives d'une ou de plusieurs caractéristiques d'accès du bloc de données respectif, et où, lorsqu'un bloc de données est rencontré par un gestionnaire de mémoire tampon client une deuxième fois, ou une fois subséquente, lesdites données d'accès sont actualisées, et où, de préférence, lorsqu'un bloc de données est rencontré pour la deuxième fois, ou une fois subséquente, le gestionnaire de mémoire tampon respectif est agencé de façon à promouvoir ledit bloc de données dans la mémoire tampon respective vis-à-vis des autres blocs de données dans la mémoire tampon.

14. Un système à mémoire tampon selon l'une quelconque des Revendications précédentes, où, dans le cas où un gestionnaire de mémoire tampon client (22) reçoit à partir d'un autre desdits gestionnaires de mémoire tampon client et/ou de la mémoire tampon client respective (18) le cas échéant, une référence à un ou plusieurs desdits blocs de données (30) identifiés être relativement importants, ledit autre gestionnaire de mémoire tampon client est amené à envoyer lesdits un ou plusieurs desdits blocs de données audit gestionnaire de mémoire tampon client sans que ledit gestionnaire de mémoire tampon client ait besoin de les demander.

15. Un procédé de partage de blocs de données dans un système à mémoire tampon destiné à une utilisation avec une pluralité de clients (12) en communication avec au moins un serveur (14) par l'intermédiaire d'un réseau de communication (16), où chaque client est associé à une mémoire tampon client respective (18) et est configuré de façon à conserver en mémoire dans ladite mémoire tampon respective au moins certains blocs de données (30) qui sont, en utilisation, transmis entre ledit client et ledit au moins un serveur, le système à mémoire tampon comprenant une pluralité de gestionnaires de mémoire tampon comprenant un gestionnaire de mémoire tampon client respectif (22) destiné à la gestion de chaque mémoire tampon client, le procédé comprenant l'entretien, pour chaque mémoire tampon client, d'un profil de données respectif contenant des données qui sont indicatives de l'importance relative de blocs de données conservés en mémoire dans la mémoire tampon client respective, la communication à chacun desdits gestionnaires de mémoire tampon client de données qui identifient des blocs de données conservés en mémoire dans la mémoire tampon client respective de chacun des autres gestionnaires de mémoire tampon client qui sont déterminés à partir du profil de données respectif être relativement importants, et le partage d'au moins certains desdits blocs de données relativement importants entre au moins certains desdits clients.
